# EUROPEAN PATENT SPECIFICATION

(11) **EP 3 501 084 B1**
(45) Date of publication and mention of the grant of the patent: **14.10.2020**
(21) Application number: 17746497.1
(22) Date of filing: 02.08.2017
(51) Int. Cl.: H02J 50/80, H02J 50/12, H05B 47/19

(54) **AN INTERFACE CIRCUIT AND AN EXTERNAL CIRCUIT**
SCHNITTSTELLENSCHALTUNG UND EXTERNE SCHALTUNG
CIRCUIT D'INTERFACE ET CIRCUIT EXTERNE

(30) Priority: 22.08.2016 WO PCT/CN2016/096281; 19.10.2016 EP 16194628
(43) Date of publication of application: 26.06.2019
(73) Proprietor: Signify Holding B.V., 5656 AE Eindhoven (NL)
(72) Inventor: SHI, Liang, 5656 AE Eindhoven (NL); YANG, Chun, 5656 AE Eindhoven (NL); WANG, Gang, 5656 AE Eindhoven (NL); LI, Kang, 5656 AE Eindhoven (NL)
(74) Representative: Verweij, Petronella Daniëlle
(86) International application number: PCT/EP2017/069549
(87) International publication number: WO 2018/036771

(56) References cited:
- US-A1- 2015 229 224

## Description

### FIELD OF THE INVENTION

This invention relates generally to the field of wireless power transfer, and more particularly wireless power transfer re-using an existing ballast.

### BACKGROUND OF THE INVENTION

Drivers may be used to provide a voltage supply to a load, such as a lighting device for example.

The remote management of lighting devices using wireless communication has been proposed wherein, instead of controlling the power (e.g. 230V supply) to the lighting device, the light source or lighting device (i.e. the exchangeable lighting element lighting device) is directly controlled by sending a wireless control signal to the lighting device.

Since the introduction of cost-efficient and small form-factor sensors wireless control/sensor modules for integrating into smart luminaires/lamps (which enable richer interaction and control), there has been a large rise in the interest and demand in such control concepts

Several approaches to including control/sensor modules in lighting devices are known. The most popular approach is to integrate a control or sensor module inside the lighting device. However, another approach is to provide for a 'plug and play' solution which caters for control or sensor module to be connected (e.g. 'plugged-in') to the lighting device. This approach provides more flexibility for a customer, by enabling functionality of the lighting device to be changed, improved or extended according to connected control module. The drawback of this approach, however, is that it requires wireless transmission of power and control data between the control module and the driver circuit of the lighting device.

There are several wireless power transfer solutions on market. The Qi standard, however, is the most popular standard which provides means for wireless power and data exchange. It provides for data exchange by changing the load characteristic on the receiver Rx (i.e. control module) coil/winding and sensing the voltage changing on transmitter Tx (i.e. driver circuit) coil/winding. The sensed voltage changing is then transformed to a digital message. US20150229224A1 discloses a transformer communication system based on a switched mode power converter.

For commercial and professional applications, the tubular lighting device is the most commonly employed lighting device, and, due to this, the tubular LED (TLED) has been designed to be a retro-fit lighting device which can replace a conventional tubular lighting device without requiring modification to the lighting fixture.

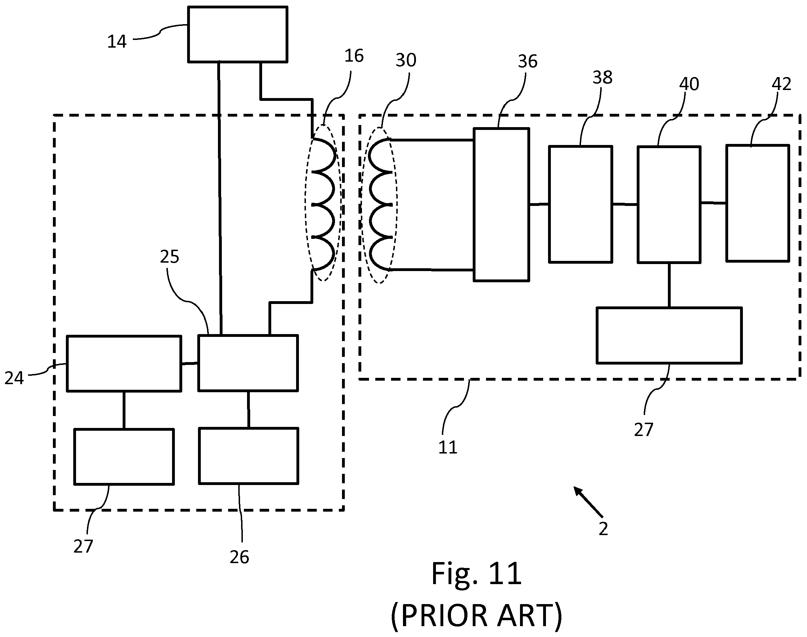

Fig. 11 shows a conventional structure that re-uses the high frequency (HF) AC output of the ballast for wireless/inductive power transfer. The essential part is a primary power winding 16 in series with the ballast 14 and the LED driver 25, and this primary power winding 16 is able to transmit the high-frequency (HF) signal into magnetic flux to be harvested by the secondary winding 30 in the external/sensor module 11 (which is magnetically coupled to the primary power winding 16).

Considering wireless power and data exchange for a 'plug and play' smart TLED, there exists the problem that the TX (i.e. driver circuit) coil/winding 16 is in series with TLED driver/ballast 14 and floats with control circuit inside the TLED, thus making it difficult to monitor the primary power winding signal (which is essentially the HF AC output of the ballast) for data signal transfer (as well as making it difficult to modulate information onto this primary power winding signal). The prior solution for this problem of enabling wireless data transfer in a plug and play smart TLED is to add additional RF communication (e.g. ZigBee) modules 27 in both the TLED and sensor/control module. However, this has the drawback of increasing system cost and complexity.

### SUMMARY OF THE INVENTION

It would be advantageous to have a low cost driver circuit which provides for both wireless power and data exchange with a control circuit (e.g. control or sensor module). Specifically, it would be advantageous to have a driver circuit having an isolation barrier across which information regarding an input power supply may be transmitted without the need for additional expensive or duplicated communication components.

A basic idea of proposed embodiments is to employ an additional winding (i.e. a data winding in addition to the primary power winding) for data signal transfer which isolates the data encoding/decoding from the power line of the ballast, the primary power winding and the LED driver. A data signal extraction/decoding circuit may then be connected to the additional (i.e. data) winding, for example to monitor the load changing on the external side (e.g. on a secondary data winding of a control circuit magnetically coupled to the additional winding) and extract a data signal. Data encoding can also be done in a reverse manner. Thus, there is proposed a concept for enabling data communication between a ballast structure and an add-on (e.g. plug and play) sensor/control module through magnetically coupled coils which can also be used for power harvesting. The primary power winding, the additional data winding, the data signal decoding circuit, and the data signal encoding circuit can be integrated as an interface circuit, between a ballast and the external circuit. Such interface circuit can also integrate a driving unit for driving the load, such as the TLED, and in turn such interface circuit can also be regarded as a driver circuit.

According to examples in accordance with an aspect of the invention, there is provided an interface circuit to be used with ballast, comprising: an input adapted to be coupled to an external ballast; a primary power winding electrically coupled to the input; and a data transceiver circuit comprising: a primary data winding; a primary load across the primary data winding; a primary load modulation circuit electrically coupled to the primary data winding and adapted to modulate a primary load across the primary data winding in response to a first data signal to be transmitted via the primary data winding; and a data detection circuit electrically coupled to the primary data winding and adapted to detect a second data signal from a signal induced on the primary data winding, wherein the primary power winding and primary data winding are magnetically coupled together and adapted to be magnetically coupled to a secondary data winding of an external circuit, and wherein the input is adapted to be coupled to the external electronic ballast adapted for fluorescent or halogen lamps.

Proposed is a concept for passing information/data between an interface circuit and an external (control) circuit via a magnetic coupling (e.g. isolation barrier) without employing additional RF communication modules/components (such as ZigBee communication modules for example). In particular, it is proposed to employ an additional winding other than the primary power winding in the interface circuit for data signal transfer, wherein the additional winding isolates the data transfer from a power line connected to the primary (i.e. power transfer) winding. A principle behind this solution is that of using a one coil/winding for wireless power transmission and another coil/winding for data communication. A double winding interface circuit coil (i.e. primary coil) may therefore be proposed.

By electrically isolating the coil/winding for data communication (i.e. "the primary data winding") from the coil/winding for power transmission (i.e. "the primary power winding"), monitoring of primary data winding for data signal transfer can be made easier (e.g. because there is no need to monitor the high-frequency AC voltage/current of a ballast-TLED power line which may float and difficult to monitor).

Embodiments may further comprise a control unit electrically coupled to the data detection circuit and adapted to extract data from the second data signal. The control unit may be further electrically coupled to the primary load modulation circuit and adapted to generate the first data signal to be transmitted. Embodiments may thus provide for data exchange using primary data winding by changing the load characteristic on the primary data winding and sensing the voltage changing on receiver Rx (i.e. secondary) coil/winding of a control circuit; and vice versa. Embodiments may thus provide for data exchange using primary data winding by controlling load modulation and detection.

The control unit may comprise a microcontroller. Cheap components and relatively simple circuitry arrangements may be used, thereby reducing the associated complexity and/or cost of obtaining information (e.g. data) across an isolation barrier.

In an embodiment, the primary load modulation circuit is adapted to modulate the primary load at a relatively low frequency with respect to the relatively high frequency of the AC power output by said external electronic ballast. This embodiment provides a low cost communication solution since modulation at the low frequency is relatively easy.

In some embodiments, said signal induced on the primary data winding comprises a relatively high frequency component induced by an HF AC power on the primary power winding (16) and a relatively low frequency envelop of the high frequency component, the data detection circuit may comprise: a filter circuit adapted to filter the signal induced on primary data winding so as to generate a filtered signal, as the second data signal, by removing the frequency component corresponding to the AC signal induced by the primary power winding. In this way, embodiments may be arranged to filter the high frequency AC component induced by the ballast, thus the second data signal from the external circuit can be retrieved with the interference removed. Simple circuit arrangements may thus be employed, thereby reducing the associated complexity and/or cost of embodiments.

The filter circuit may, for example, be adapted to generate a pulse width modulation signal as the filtered second data signal. Also, the interface circuit may further comprise: a driving unit adapted to provide power supply to the light source from power from the input; and a switching arrangement adapted be controlled by the pulse width modulation signal to enable and disable the driving unit in a pulse width modulation manner. In this way, the second data signal can be the PWM dimming signal and then the driving unit can be controlled directly by the PWM dimming signal, without using digital communication protocol. This embodiment provides a simple dimming method in this application.

The input may be adapted to be coupled to an external electronic ballast adapted for fluorescent lamps or halogen lamps, and the primary load modulation circuit may be adapted to modulate the primary load at a frequency at most one twentieth of the frequency of the AC power output by said external electronic ballast. For example, where a ballast frequency is about 30k to 80kHz, the data rate or PWM frequency of the wireless system may be about 1kHz. This embodiment can prevent the data modulation from being interfered by the HF signal of the ballast.

For example, the primary load modulation circuit may comprise a modulator adapted to generate a modulated signal in response to the first data signal to be transmitted, and
the primary load modulation circuit may further comprise: a switch across the primary data winding and adapted to load or not load circuit the primary data winding according to the modulated signal.

This provides a simple load modulation on the primary data winding. More specifically, in case the interface wants to send symbol "1", the switch would unload (not load) the primary data winding thus a relatively large power can be detected on the external secondary data winding (since the primary data winding is not loaded and in turn consumes less energy from the primary power winding); otherwise the interface wants to send symbol "0", the switch would load the primary data winding thus a relatively small power can be detected on the external secondary data winding (since the primary data winding is loaded and consumes more energy from the primary power winding).

For example, an embodiment may further comprise: a sensing unit adapted to sense the external circuit and generate a sensing signal in response to a presence of the external circuit; and a shorting circuit electrically coupled to the primary data winding, wherein the shorting circuit is adapted to short circuit the primary data winding in response to an absence of said sensing signal. By shorting the primary data winding, radiation of EM emissions from the primary power winding may be minimised when an add-on (e.g. plug and play) control module is absent.

According to an example, there may be provided an external circuit adapted to be magnetically coupled to the interface circuit of any one of the preceding aspects, wherein the external circuit comprises: a secondary data winding adapted to be magnetically coupled to the primary power winding and the primary data winding of the interface circuit; a second load across the secondary data winding; a secondary load modulation circuit adapted to modulate a second load across the secondary data winding in response to a second data signal to be transmitted via the secondary data winding; and a secondary data detection circuit adapted to detect a first data signal from a signal induced on the secondary data winding, wherein the secondary data detection circuit (40) further comprises a filter to filter the signal induced on the secondary data winding so as to generate a filtered signal, as the first data signal, which is a low frequency envelop of the high frequency component induced by an HF AC power on the primary power winding (16), by removing the high frequency component.

This embodiment detects low frequency envelop and the detection is thus more easy than high frequency detection.

Some embodiments may further comprise a secondary control unit electrically coupled to the secondary data detection circuit and adapted extract a first data from the first data signal. The secondary control unit may be electrically coupled to the secondary load modulation circuit and further adapted to generate the second data signal to be transmitted.

By way of example, the secondary load modulation circuit is adapted to modulate the secondary load at a relative low frequency with respect to the relatively high frequency of the AC power on the primary power winding, output by said external electronic ballast. This provides a corresponding transmission/modulation function corresponding to the reception/demodulation function.

Preferably, the secondary load modulation circuit may be adapted to modulate the secondary load at a frequency at most one twentieth of the frequency of an AC voltage induced on the secondary data winding by the primary power winding. This embodiment can prevent the interference from the HF signal of the ballast.

The secondary load modulation circuit may be adapted to modulate a pulse width modulation signal as the second data signal, wherein said pulse width modulation signal is adapted to enable and disable the interface circuit in driving a light source in a pulse width modulation manner. This embodiment provides a simple dimming solution based on PWM in this application.

Embodiments may further comprise a communication interface adapted to be connected to a communication bus. Also, the secondary load modulation circuit may comprise a switch connected in parallel with the secondary data winding, wherein the switch is adapted to short or not short the secondary data winding in response to a communication Rx signal received from the communication bus thereby transmitting the communication Rx signal to the interface circuit.

As one typical communication protocol, the above communication bus is a DALI bus. Thus, a control circuit may be provided which may implement a DALI system with reduced complexity and/or cost compared to conventional versions that require wireless communication modules (such as ZigBee modules for example). This external/control circuit further provides an inherent isolation between the DALI bus and the interface circuit.

Embodiments may further comprise: a converter circuit electrically coupled to the secondary data winding and adapted to convert power induced on the secondary data winding, wherein the converter circuit is electrically connected between the secondary data winding and the communication interface, wherein the secondary data detection circuit is adapted to detect the first data signal as a communication Tx signal. Such embodiments may also comprise filter circuit adapted to filter the first data signal induced on secondary data winding so as to generate a filtered first data signal as the communication Tx signal, wherein the switch of the secondary load modulation circuit is further coupled in parallel with the communication interface, and is adapted to short or not short said communication bus according to said filtered first data signal. This embodiment further provides power onto the communication bus and satisfies some specific standard that requires power on the bus.

By way of example, embodiment may therefore utilize the wireless coupling saturation and DALI communication characteristic to realize Bi-directional DALI communication and power supply. Unlike regular wireless systems which employ a private/proprietary protocol for communication, embodiments may use the DALI communication protocol. This may avoid the need for a translation circuit (e.g. microprocessor unit) between the control circuit and the interface circuit.

The converter circuit may comprise a voltage amplification circuit being adapted to amplify a voltage induced on the secondary data winding and to provide the amplified voltage to the communication interface. By way of example, the voltage amplification circuit may be adapted to double the second (i.e. RX) data winding voltage to regular DALI voltage (e.g. a data 'high' or '1' voltage in the range of 12-20V) in order to meet the specification of the DALI protocol.

Also, the external circuit may further comprise: a regulating circuit between the secondary data winding and the switch, said regulating circuit being adapted to be, during communication Tx procedure: deactivated so as to isolate the converter circuit from the switch, when the switch of the secondary load modulation circuit is adapted to short said communication bus; and activated so as to allow voltage from the converter circuit coupled to the communication bus when the switch of the secondary load modulation circuit is adapted to not short said communication bus. This embodiment can provide a sharp signal edge for the communication since the converter is isolated and its voltage potential is maintained high which can provide an immediate high voltage for the next symbol change. The regulating circuit is further adapted to be, during communication Rx procedure: activated so as to allow voltage from the converter circuit coupled to the switch when the switch is adapted to short or not short the secondary data winding in response to the communication Rx signal as the second data signal. This embodiment can allow the converter circuit to modulate the load of the secondary data winding.

Communication may therefore be based on the DALI protocol, and, during communication Rx procedure, said regulating circuit may be adapted to draw energy higher than the energy on the secondary data winding induced by the first power winding of the interface circuit. Thus the inductive powering system would "saturate", the voltage across the secondary data winding will drop, and in turn the voltage across the primary data winding will also drop so as to be detected as "zero". Embodiments may therefore utilize the inductive powering system saturation to transfer a data signal to interface circuit wirelessly.

According to an example, there may be provided a lighting device comprising an interface circuit according to a proposed embodiment, a driving unit, and lighting source. For example, embodiments may be implemented in a TLED so as to provide a retro-fit smart TLED that can replace a conventional tubular lighting device without requiring modification to the lighting fixture.

According to an example, there may be provided a lighting device comprising: a lighting device according to a proposed embodiment; and an external (e.g. control) circuit according to a proposed embodiment. Embodiments may thus be provided complete with an external control circuit, and the external control circuit may be adapted to be removable from the lighting device so as to be replaced with a different external control circuit providing different functionality for example.

The lighting device may comprise a tubular LED to be powered by an external ballast. Embodiments may thus be applicable to retrofit smart TLEDS, although they may also be applicable to other types of smart lighting devices. Such applicability to smart TLEDS may make proposed embodiments useful for a wide range of applications. For example, there may be provided a TLED comprising an interface circuit according to an embodiment.

According to an example, there may be provided a method for interfacing between a ballast and an external circuit, by using a primary power winding electrically coupled to the ballast and having a primary data winding electrically coupled to a primary load modulation circuit and a primary load detection circuit, wherein the method comprises: magnetically coupling the primary power winding and the primary data winding to a secondary data winding of an external circuit; modulating a primary load across the primary data winding in response to a first data signal to be transmitted via the primary winding; and detecting a second data signal from a signal induced on the primary data winding.

These and other aspects of the invention will be apparent from and elucidated with reference to the embodiment(s) described hereinafter.

### BRIEF DESCRIPTION OF THE DRAWINGS

Examples of the invention will now be described in detail with reference to the accompanying drawings, in which:
Fig. 1, there is depicted a simplified block diagram of a lighting system according to an embodiment;
Fig. 2 illustrates a double winding coil as the primary coil in an interface circuit, according to an embodiment;
Fig. 3 depicts an exemplary simulation circuit for the embodiment of Fig. 1;
Fig. 4A depicts signals from a simulation of the circuit of Fig. 3;
Figs. 4B and 4C depict exemplary signals from a practical implementation of the circuit of Fig. 3, wherein Fig. 4C shows only a short window of time for improved visibility of the signal variations;
Fig. 5 illustrates a communication protocol for dimming according to a proposed embodiment;
Fig. 6 illustrates a proposed modification to the circuit of Fig. 3;
Fig. 7 shows the typical signal definition on a regular DALI bus;
Fig. 8 depicts a wireless DALI-based communication interface according to a proposed embodiment;
Fig. 9 depicts signals from a simulation of the circuit of Fig. 8 during a RX procedure;
Figs. 10A-B depicts signals from a simulation of the circuit of Fig. 8 during a TX procedure; and
Fig. 11 depicts a simplified block diagram of a prior lighting system that uses Zigbee for data communication and inductive powering for power transmission respectively.

### DETAILED DESCRIPTION

It should be understood that the Figures are merely schematic and are not drawn to scale. It should also be understood that the same reference numerals are used throughout the Figures to indicate the same or similar parts.

Proposed is a concept of employing an additional winding (e.g. a data winding in addition to the conventional power transfer winding) in an interface circuit used with ballast. This may provide for wireless communication between the interface circuit and an external (e.g. control or sensor) circuit through magnetically-coupled windings whilst also enabling power harvesting.

Use of an extra (e.g. data) winding in addition to the primary power winding can isolate the data encoding/decoding from the power line of the ballast.

For example, in Rx (from the external circuit to the interface circuit), a data signal extraction circuit is connected to the extra (e.g. data) winding so as to monitor load changing on a secondary data coil of an external circuit magnetically coupled to the extra winding and to then extract a data signal for decoding. Thus, there is proposed a concept for enabling data communication between an interface circuit to ballast and an add-on (e.g. plug and play) sensor/control module through magnetically coupled coils which can also be used for power harvesting.

Further, in Tx (from the interface circuit to the external circuit), there is provided a concept for passing information/data between an interface circuit to ballast and an external control circuit via a magnetic coupling (e.g. isolation barrier) without employing additional wireless communication modules/components (such as ZigBee communication modules for example). In particular, data signal transfer may be enabled by employing an additional primary/TX (data) winding in the interface circuit which isolates the data transfer from a power line connected to the primary/TX (power) winding.

In other words, a principle employed is that of using a one primary winding for wireless power transmission and another primary winding for data communication. A dual winding interface circuit coil (i.e. primary coil) may therefore be implemented in proposed embodiments.

Electrically isolating the primary data winding from the primary power winding may enable easier monitoring of primary data winding for data signal transfer (e.g. because a large high-frequency AC voltage present on the power line connected to the primary power winding may be float and difficult to detect, while this HF AC can be filtered at the primary data winding).

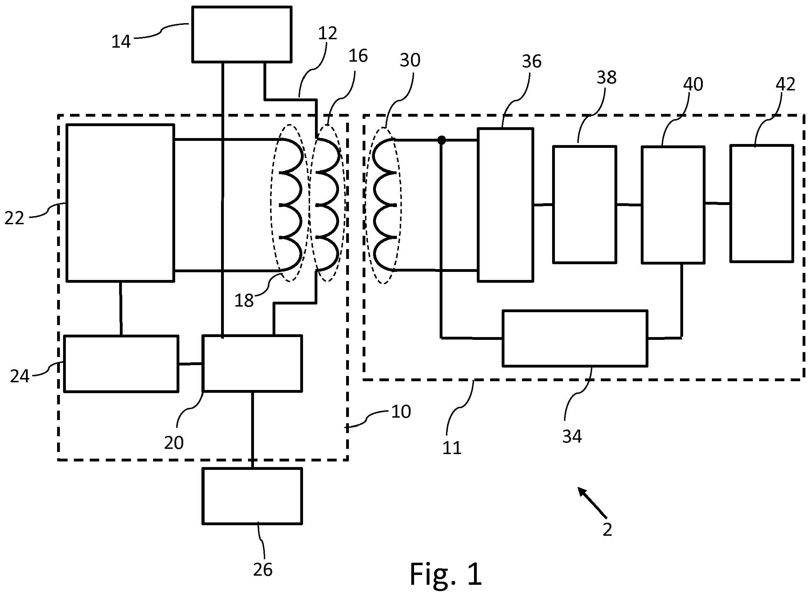

Referring to Figure 1, there is depicted a simplified block diagram of a lighting system 2 according to an embodiment. The lighting system 2 comprises an interface circuit 10 according to an embodiment magnetically coupled to a control/external circuit 11. In this example, the control circuit 11 is provided in the form of an external circuit module that is adapted to be removable from the lighting system (so as to be replaced with a different external circuit for example).

In this example, the interface circuit 10 comprises an input 12 coupled to an external ballast 14 being used for driving a TLED, which ballast is an electronic/HF ballast adaptable to drive fluorescent/halogen lamp. A primary power winding 16 is electrically coupled to the input 12. In particular, the primary power winding 16 is connected in series on the ballast 14 to an optional TLED power supply 20, such that the HF AC power signal from the ballast flows through to the TLED power supply 20. The TLED converter 20 converts the HF AC ballast output to suitable current and voltage of the LEDs 26. What is to be noted is: the direct connection between the converter 20 and the ballast 14 is the current close loop path with respect to a path formed by the primary power winding 16.

In this embodiment, the TLED power supply 20 is integrated within the interface circuit 10, and the whole interface circuit can also be regarded as a driver circuit. The following description will be based on this structure. But what is important to understand is: the LED power supply is not so relevant with the data communication between the interface circuit and the external circuit. In an alternative embodiment, the converter 20 can be external to and connected to the primary power winding 16 of the interface circuit 10.

The driver circuit 10 also comprises a data transceiver circuit for realising data communication between the interface circuit 10 and the external/control circuit 11. More specifically, the data transceiver circuit of this example comprise: a primary data winding 18; a primary load modulation circuit electrically coupled to the primary data winding 18; and a primary data detection circuit electrically coupled to the primary data winding 18. The primary load modulation circuit and the primary data detection circuit are together shown as the block 22.

The primary load modulation circuit 22 is adapted to modulate a primary load across the primary data winding 18 in response to a first data signal to be transmitted via the primary data winding 18. By way of example, in this embodiment, the primary load modulation circuit 22 comprises: a modulator adapted to generate a modulated signal in response to the first data signal to be transmitted; and a switch arranged across the primary data winding 18 and adapted to load or not load circuit the primary data winding 18 according to the modulated signal. More specifically, the switch can be used for drawing energy from the primary data winding, or nor drawing energy. In case of drawing energy, the inductive power over the inductive coupling among the primary power winding, the primary data winding and the secondary data winding is drawn away, thus the voltage over the primary data winding and the secondary data winding is relatively low. This low voltage over the secondary data winding can be detected by the external/control circuit; and vice versa.

The first data signal to be transmitted is generated by a control unit 24 coupled to the primary load modulation circuit 22. Thus, the depicted embodiment enables a first data signal to be generated by the control unit 24 and then transmitted wirelessly via the primary data winding. It is noted that the control unit 24 of this example comprises a microcontroller, although other suitable control circuits, arrangements and/or chips may be employed in alternative embodiments.

The primary data detection circuit 22 is adapted to detect a second data signal from a signal induced on the primary data winding 18. Here, the primary data detection circuit 22 comprises a filter circuit adapted to filter the second data signal induced on primary data winding 18 so as to generate a filtered second data signal by removing the frequency component corresponding to the AC signal induced by the primary power winding 16. In this way, the high frequency AC component induced by the ballast can be removed.

Also, the data detection circuit 22 is electrically connected to the control unit 24 so that the filtered second data signal can be provided to control unit 24. In this way, the control unit 24 is adapted to receive a detected (and filtered) second data signal from the data detection circuit 22.

The control unit 24 is adapted to extract data from a received second data signal. Thus, the depicted embodiment also enables a second data signal to be wirelessly received (e.g. from the control circuit 11) via the primary data winding 18.

To enable power and data transfer between the driver circuit 10 and the control circuit 11, the primary power winding 16 and primary data winding 18 are magnetically coupled together and also adapted to be magnetically coupled to a secondary (data) winding 30 of the control circuit 11.

The control circuit 11 of the depicted example is therefore adapted to be magnetically coupled to the driver circuit 10. In addition to the secondary (data) winding 30, the control circuit comprises: a secondary load modulation circuit 34 adapted to modulate a second load across the secondary (data) winding 30 in response to a second data signal to be transmitted via the secondary data winding 30; and a secondary data detection circuit 40 adapted to detect a first data signal from a signal induced on the secondary data winding 30. Thus, the control circuit 11 enables a second data signal to be generated (using the secondary load modulation circuit 34) and then transmitted wirelessly via the secondary data winding 30.

By way of example, the secondary load modulation circuit 34 of this embodiment is adapted to modulate a secondary load at a frequency which does not exceed one twentieth (1/20) of the frequency of an AC voltage induced on the secondary data winding by the primary power winding 16 of the driver circuit 10. The modulated signal can be in the form of digital encoded signal. By way of another example, the secondary load modulation circuit 34 may be adapted to modulate a pulse width modulation signal as the second data signal, wherein said pulse width modulation signal is adapted to enable and disable the driving unit 20 for driving a light source in a pulse width modulation manner.

Also, the secondary data detection circuit 40 comprises a filter arrangement adapted to filter a first data signal received by the secondary data winding 30 so as to generate a filtered first data signal by removing the frequency component corresponding to the AC signal induced by the primary power winding 16 of the interface circuit 10. Thus, the control circuit 11 enables a first data signal to be received wirelessly from the interface circuit 10 via the secondary data winding 30, wherein the first data signal can be filtered so as to remove unwanted frequency components that may be present in the signal (e.g. from the AC signal in the power line connected to the primary power winding 16).

It will therefore be understood that the depicted embodiment of Figure 1 provides for data exchange using the primary data winding 18 by changing the load characteristic on the primary data winding 18 and sensing the voltage changing on the secondary winding 30 of the control circuit 11. It also provides for data exchange using the secondary data winding 30 by changing the load characteristic on the secondary data winding 30 and sensing the voltage changing on the primary data winding 18 of the interface circuit 10.

The interface circuit 10 further comprises a driving unit 20 adapted to provide power supply to the light source 26 from power from the input 12; and a switching arrangement (implemented by the driving unit 20) that is adapted be controlled by a pulse width modulation (PWM) signal to enable and disable the driving unit 20 in a pulse width modulation manner.

In the example of Figure 1, the primary load modulation circuit 22 is adapted to modulate the primary load at a frequency at most one twentieth (1/20^{th}) of the frequency of the AC power output by the external electronic ballast 14. For example, where a ballast frequency is about 30k to 80kHz, the data rate or PWM frequency of the wireless system may be about 1kHz.

The external circuit 11 may be a sensor or a controller. In order to retrieve power from the secondary data winding, the circuit 11 further comprises a rectifier (optionally with compensation function) 36, a power converter 38, a MCU 40 and a sensor 42. The power converter 38 converts the rectified inductive power into a proper voltage/current for the MCU and sensor. This is not very relevant with the data communication as discussed above. Here please note that the name "secondary data winding" does not limit the winding as only for data communication, and the secondary data winding also provides power to the external circuit 11, besides the data communication.

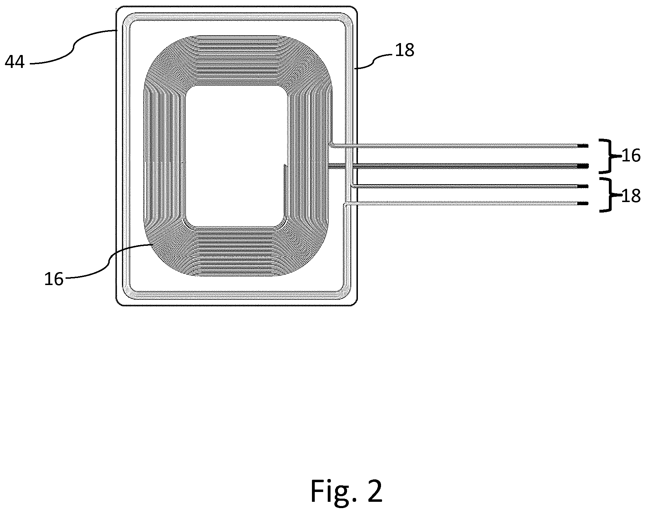

From the above description, it will be understood that a double winding primary coil is proposed. As depicted in Figure 2, the double winding primary coil may comprise two windings twine with the same magnetic shielding 44, one winding (i.e. the primary power winding 16) being used for wireless power transmission and the other winding (i.e. the primary data winding 18) being for data communication. The winding structure presented in Figure 2 is only an example of potential implementation which is easy to manufacture.

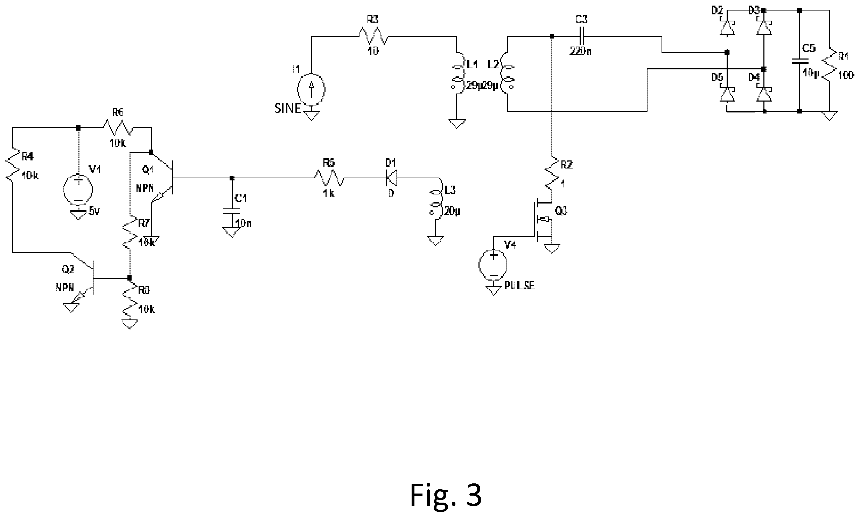

Figure 3 depicts an exemplary simulation circuit for the embodiment of Figure 1. A resistance R3 is connected between a current source I1 (standing for the ballast) and the primary power winding L1 of the primary coil, wherein the resistance R3 simulates the LED power supply. The primary power winding L1 and the primary data winding L3 coupled together as the primary coil, which is magnetically coupled to the secondary data winding L2 as the secondary coil. A secondary load modulation circuit comprising a series connection of resistance R2 and third transistor Q3 is connected between the secondary data winding L2 and a voltage source V4. The secondary load modulation circuit is used to change the load character on the secondary data winding L2, wherein the control terminal of the transistor Q3 is triggered by the voltage source V4 (which is adapted to pulse at a frequency of 1 kHz in the simulation).

The primary data winding L3 of the primary coil is also magnetically coupled to the secondary data winding. The primary data winding L3 of the primary coil is adapted to receive data signal from the secondary data winding of the secondary coil.

A signal extract circuit is connected to primary data winding L3 of the primary coil. Here, the signal extract circuit comprises a series connection of a diode D1 and resistance R5 connected between the primary data winding L3 and the control terminal of a first transistor Q1. A first capacitor C1 is also connected between ground and the control terminal of the first transistor Q1. The collector of the first transistor Q1 is connected to control terminal of a second transistor Q2. In this way, an induced signal on the primary data winding L3 controls the first transistor Q1 so as to control the second transistor Q2 in turn, thereby enabling recovery of signal induced on the primary data winding L3 by the secondary data winding L2.

Here, it is noted that Figure 3 only shows the secondary load modulation circuit on the external circuit and the first data detection circuit on the interface circuit, while the primary load modulation circuit on the interface circuit and the secondary load detection circuit on the external circuit is not shown but they can be configured in a similar manner.

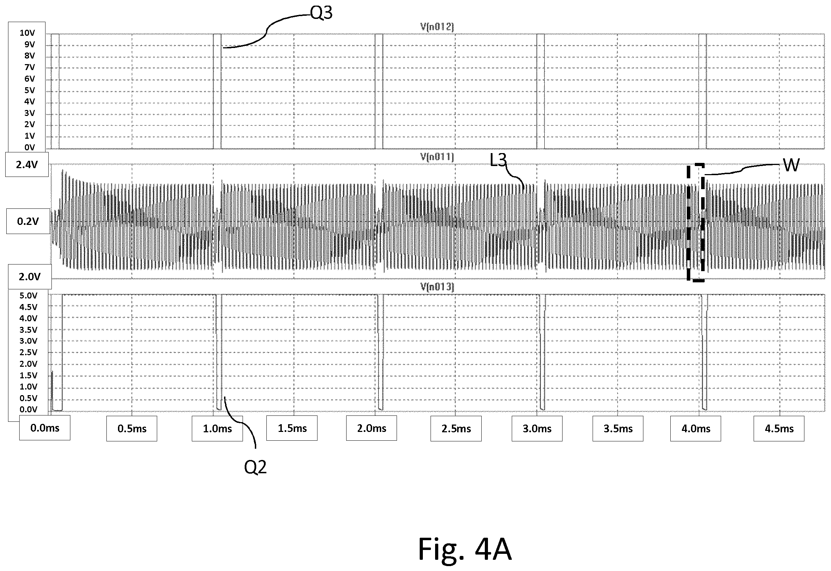

Turning to Figure 4A, there are depicted signals from a simulation of the circuit of Figure 3.

The top waveform of Figure 4A, labelled "Q3", depicts the encoding signal on the third transistor Q3 with respect to elapsed time (increasing from left to right). The encoding signal on third transistor Q3 pulses from low (0V) to high (10V) to load the secondary data winding L2 with R2, for a short time (of around 0.1ms in this example) at a frequency of 1 KHz.

The middle waveform of Figure 4A, labelled "L3", is the corresponding switching waveform induced on the primary data winding L3. The relatively high frequency component is the voltage induced by the HF AC output of the ballast, and the relatively low frequency of "gap" in the envelop of the high frequency component is caused by the load modulation on the secondary data winding L2. The capacitor C1 can filter the relatively high frequency component.

The bottom waveform of Figure 4A, labelled "Q2", is the corresponding decoded signal at the collector of the second transistor Q2 of the signal extract circuit, and thus the signal extracted by the signal extract circuit. It can be further inverted so as to be the same as Q3 signal.

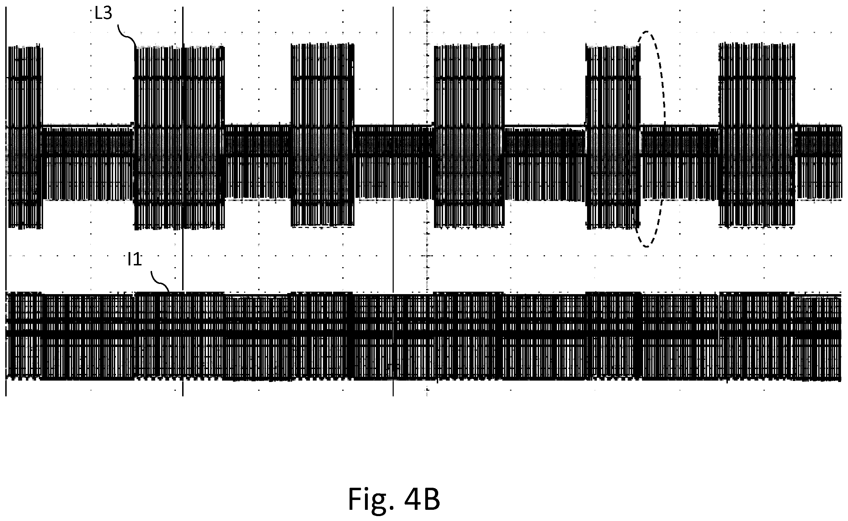

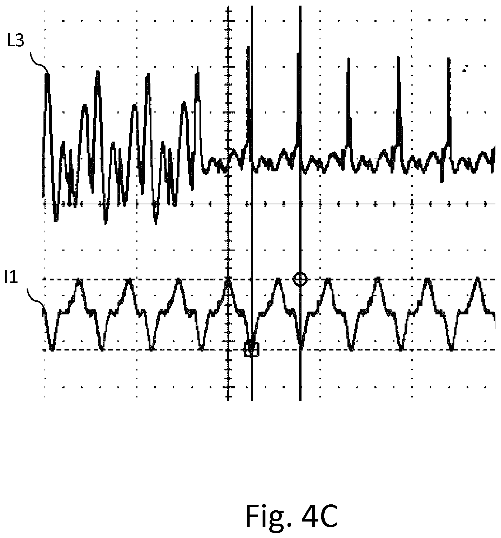

Turning now to Figure 4B and 4C, there are depicted exemplary signals from a practical implementation of the circuit of Figure 3, wherein the Figure 4B shows the signal in long term; and Figure 4C only a short window of time (similar to that indicated by the box labelled "W" in Figure 4A) encircled in Figure 4B is shown for improved visibility of the signal variations.

The top waveform of Figures 4B and 4C labelled "L3" , is the actual measured switching waveform induced on the primary data winding L3. The signal is induced by the primary power winding and by the secondary data winding. It can be seen that the difference in its (average) amplitude for different received symbol is quite distinct thus is easy for detection.

The bottom waveform of Figures 4B and 4C labelled "I1", is the signal on the primary power winding, and thus the actual ballast high-frequency AC current. It can be seen that, given different received symbol, there is little change on the amplitude of the HC AC current I1. But the change is too small to be detected. That's why the present innovation using the primary data winding, instead of the primary power winding, for detection the load modulation on the secondary data winding of the external circuit.

Unlike the pure current source in simulation circuit, the current from ballast is not an ideal constant current. Thus, although the ballast AC current I1 does not exhibit big changes during communication, there may still be a very small flicker on the TLED which may be noticeable to a human viewer. To address this issue, a protocol may be implement to reduce or minimise the effect. Like a conventional dimming procedure, when the dimming frequency goes to high frequency (for example: 500Hz) and average current is maintained with no change, the flicker effect could be avoided due to a visual perception lag of human eyes. In this way, it is proposed to maintain the encoding signal frequency high enough to avoid visual perception of flicker and implement the communication pulse using a regular pattern.

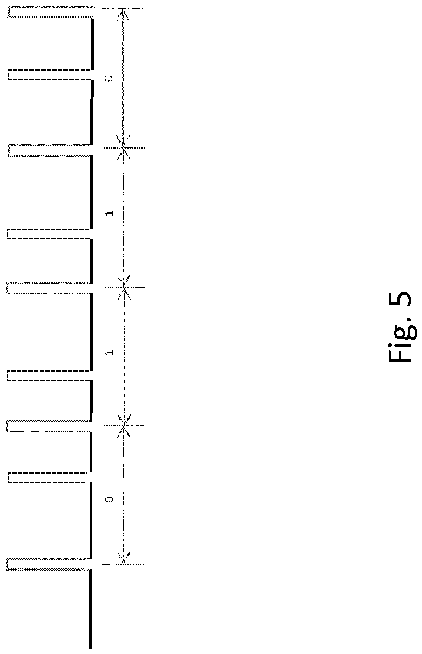

Referring the Figure 5, there is illustrated an example of such a proposed protocol. In the diagram of Figure 5, the signal represented by the solid line determines the period of the communication signal (which preferably has a frequency greater than 500Hz). The pulsed signal represented by the dashed lines is then used to distinguish data according to its position with respect to the period of the communication signal. Here, is it proposed to define a logical "high" or 1" when the pulsed signal is positioned at one third (1/3) of the way into a cycle of the communication signal, and to define a logical "low" or "0" when the pulsed signal is positioned at two thirds (2/3) of the way into a cycle of the communication signal. Thus, by maintaining the communication frequency and using the relative position of pulses with respect to the period of the communication, the data can be distinguished.

It is further noted that the additional (i.e. primary data) winding proposed in accordance with embodiments may also provide an additional benefit that enables bypassing of the primary power winding so as to minimize EMC impact when an external circuit is not present (e.g. absent from the lighting system of Figure 1 so that it is not magnetically coupled to the interface circuit 10).

By way of further explanation, it is noted that, for normal working, an add-on external circuit (such as an add-on smart module) is typically is mounted to a lighting device so that both the primary coil and the add-on secondary coil are shielded by ferrite material. However, if the external is circuit is absent (e.g. removed), one side of the interface circuit may be exposed to the air and lead to potential EMC problems. An approach to address this issue is to bypass the TX power winding in such a situation. However, where the power winding is in floating connection with light source driver, it can be very complicated to short the power winding directly.

For embodiments, however, the primary data winding and the primary power winding may be provided on the same surface of a planar primary coil. As a result of such an arrangement, the coupling between them is very good (for example, the coupling factor may be higher than 0.95), and so shorting the primary data winding is in effect similar to shorting the primary power winding. Accordingly, by shorting the primary data winding, which also stops the wireless power transmission, only a very small leakage inductance may still radiate EM radiation.

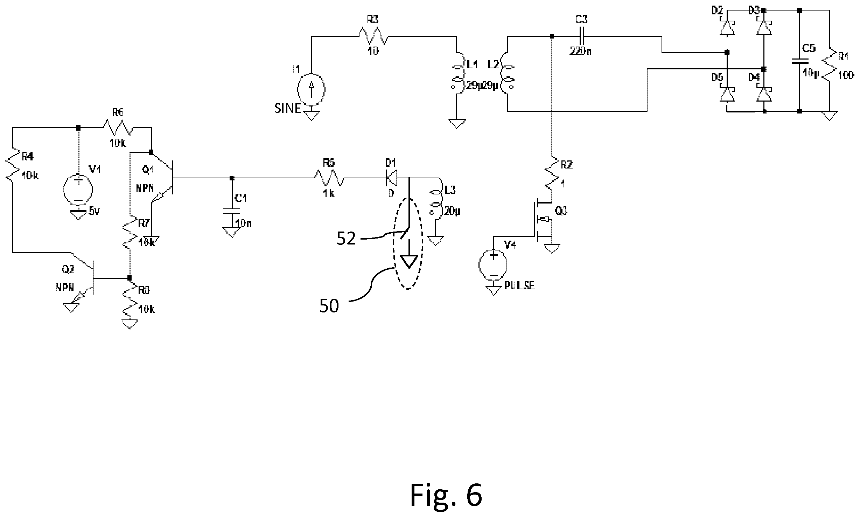

For example, referring to Fig. 6, a modification may be made to the circuit of Fig. 3 so that it further comprises a shorting circuit 50 that is adapted to short circuit the primary data winding L3. Here, the shorting circuit 50 comprises a simple arrangement of a switch 52 connected between the primary data winding L3 and ground.

The switch 52 may, for example, be operated in response to a sensor signal that is generated based on a presence of the external circuit. For instance, a magnetic sensor arrangement may be employed to generate the sensor signal in response to sensing magnetic coupling between the interface circuit and an external control circuit. In this way, a magnet sensor may be employed on the interface circuit to sense the presence/existence of an add-on external control circuit and to generate a signal indicative of the detection result. In a practical example, the sensor signal may be generated so that it controls the shorting circuit to close the switch (and thus short circuit the primary data winding) when no external control circuit is present. By shorting the primary data winding when an add-on (e.g. plug and play) control circuit, radiation of EM emissions from the primary power winding may be minimised.

It is also noted that there is proposed a concept for realising a wireless power and communication interface is a manner which is compatible with a conventional wired DALI-based communication interface. The proposed concept provides a wireless interface which utilizes the wireless coupling saturation and DALI-based communication interface characteristic to realize bi-directional DALI communication and power supply.

Thus, unlike conventional wireless systems that employ private or proprietary protocols for communication, the proposed interface can use the widely-known DALI communication protocol directly. As a result, there is no need for a translation circuit between the external control circuit/module and the microcontroller unit of the interface circuit.

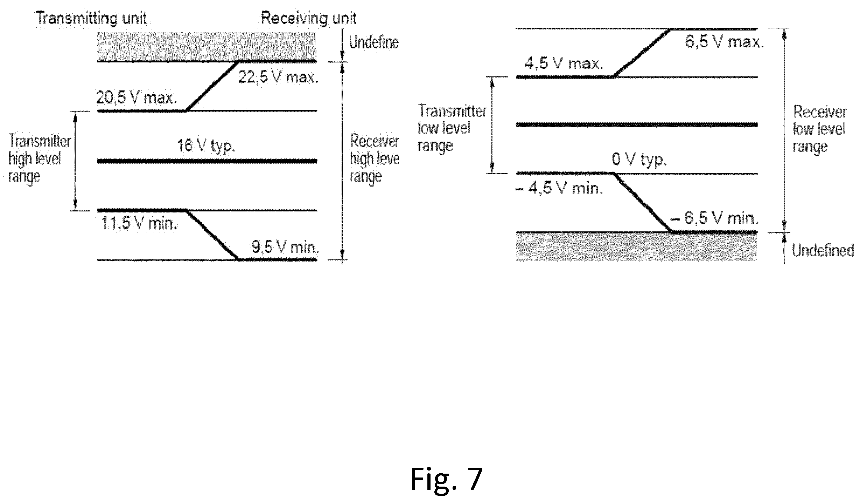

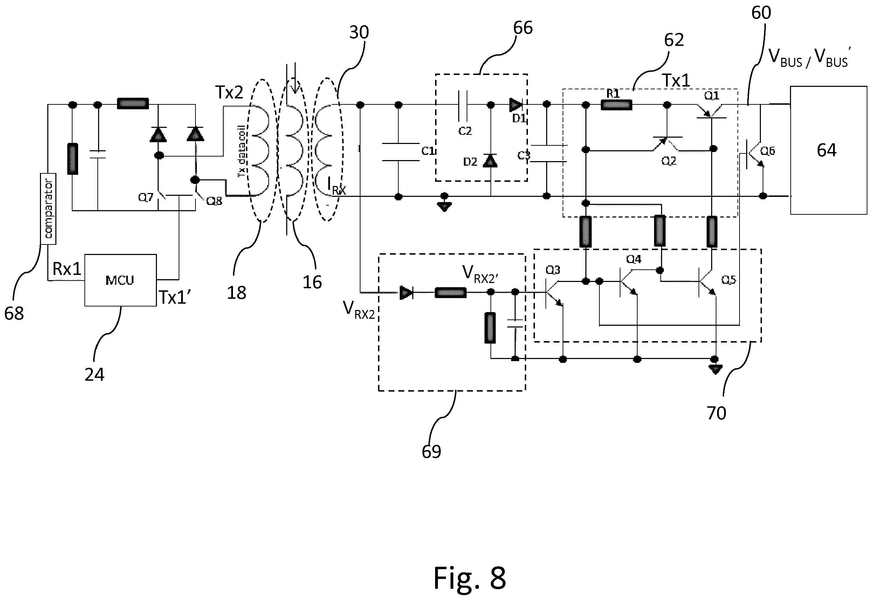

Figure 7 shows the typical signal definition on a regular DALI bus. For improved understanding, on a regular DALI bus we will consider: data "1" as having a high voltage level of typically 16V (and in the range 11.5-20.5V); and data "0" as having a low voltage level of typically 0V (and in the range -4.5V-4.5V). Thus, 16V is a typical voltage level on a DALI bus (e.g. identified as "60" in Fig. 8). Also, a DALI interface has a switch that is connected in parallel on the DALI bus, which is used to short the DALI bus to 0Vwhen a data "0" is to be communicated. Consequently, a DALI supply typically has a regulating /current limit circuit (e.g. identified as "62" in Fig. 8) to make sure the bus current does not exceed 250mA.

Thus, referring to Fig. 8, there is depicted a wireless and DALI-based communication interface according to a proposed embodiment. Thus, the interface has a switch Q6 that is connected in parallel on the DALI bus 60, the switch Q6 being used to short the DALI bus 60 to 0V when a data "0" is to be communicated, and not short the DALI bus 60 when a data "1" is to be communicated.

In case of some standard that requires to provide power onto the bus, such as DALI sensor ready (SR) protocol, a converter circuit is electrically coupled to the secondary data winding and adapted to convert power induced on the secondary data winding. Depending on the voltage level of the secondary winding and the required voltage level of the DALI bus, a voltage doubler circuit 66 (comprising a second capacitance C2 and first D1 and second D2 diodes) is optionally employed to double the secondary data winding 30 voltage to a regular DALI voltage (e.g. in the range of 12-20V). A first capacitance C1 is connected in parallel on the DALI bus 60 so as to provide a compensation capacitor which can tune the power level received on secondary data winding 30.

The regulating circuit 62 comprises a first resistance R1 and first Q1 and second Q2 transistor arranged for current limitation. The regulating circuit 62 is for the DALI bus 60 which is directly connected to a sensor circuit/module 64 that employs a DALI-based communication protocol.

Since the primary power winding is connected directly in series with the current supply for the light source (e.g. a ballast), it determines the maximum power that may be sent wirelessly.

### - RX Procedure

During a data receiving (i.e. RX) procedure, in other words during communication from the control circuit/module 64 to the interface circuit 20, the switch Q6 is adapted to short the secondary data winding 30 as data "0" and keep bus high as data "1" according to transmission signal TX1.

In this proposed embodiment, the regulating circuit is adapted to draw current greater than 100mA, and the wireless power transmission is designed only to be capable of providing a drive current less than 50mA (noting, however, that the secondary data winding 30 and first capacitance C1 behave like a current source, meaning the actual current can be tuned by the first capacitance C1).

When the switch Q6 is shorted, it pulls the current much higher than wireless secondary data winding 30 can provide and thus saturates the wireless power system, thereby causing the voltage level on secondary data winding 30 to drop significantly. Meanwhile, the voltage signal on the primary data winding 18 also drops to reflect the waveform on the secondary data winding 30.

A comparator circuit 68 provided in the interface circuit detects the drop in voltage on the primary data winding 18 and provides a signal Rx1 to the control unit 24 of the interface circuit to restore the TX1 signal from the external circuit, which TX1 signal may be from the DALI bus 60.

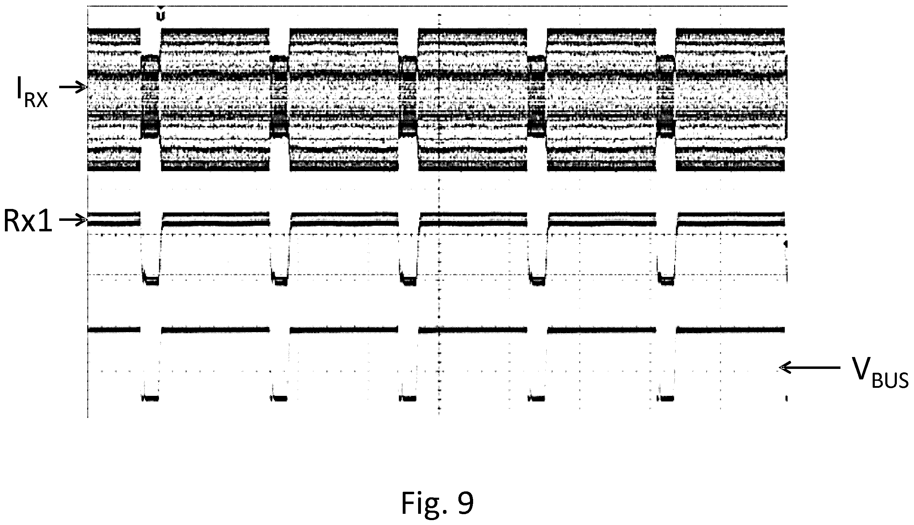

By way of example, Figure 9 depicts signals from a simulation of the circuit of Figure 8 during the RX procedure. The top waveform of Figure 9, labelled "I_{RX}", depicts the current on the secondary data winding 30 with respect to elapsed time (increasing from left to right). The middle waveform of Figure 9, labelled "Rx1", is the corresponding induced and smoothed (by the capacitor in the interface circuit) voltage signal on the primary data coil 18 of the interface circuit. The bottom waveform of Figure 9, labelled "V_{BUS}", is the corresponding signal on the DALI bus 60 and also the TX1 signal.

During data "1", the control circuit/module 64 stops shorting the DALI bus 60 and the whole system start working as normal and bus voltage recovers quickly.

Thus, as described above, the RX procedure utilizes the secondary winding short circuiting and wireless system saturation to transfer a data signal to the interface circuit wirelessly.

### - TX Procedure

During a data transmitting (i.e. TX) procedure, in other words during communication from the interface circuit to the control circuit/module 64, the data signal is generated by the control unit 24 of the interface circuit and it is proposed to short the DALI bus as data "0".

The Txl' signal from the control unit 24 is used to control switches Q7 and Q8 of the interface circuit. The switches Q7 and Q8 are used to short the primary data winding 18 at "0" and not short it at "1".

At normal operation, the switches Q7 and Q8 are arranged to operate as a bridge diode. When "0", both Q7 and Q8 turn on at same time, the primary data winding 18 is shorted and the voltage on the secondary data winding 30 thus also drops. After a simple filter circuit 69, the signal V_{RX2} and its smoothed version V_{RX2'} on the secondary data winding 30 is used to turn on the switch Q6 at the same time so as to pull the DALI bus 60 down to 0V. The signal V_{RX2} on the secondary data winding 30 is also used via control circuit 70 to turn off/deactivate the current regulating circuit 62 (by turning off Q5) to prevent capacitance C3 from discharging. During this period, the energy inside capacitor C3 keeps its voltage high (since the current limit circuit 62 is off) to keep on switches Q3, Q4 and Q5 of the control circuit 70.

At normal operation (if 1 is to be transmitted to the DALI bus), Q3 of the control circuit 69 is kept on and switch Q6 is kept off so as to maintain the DALI bus 60 at about 16V.

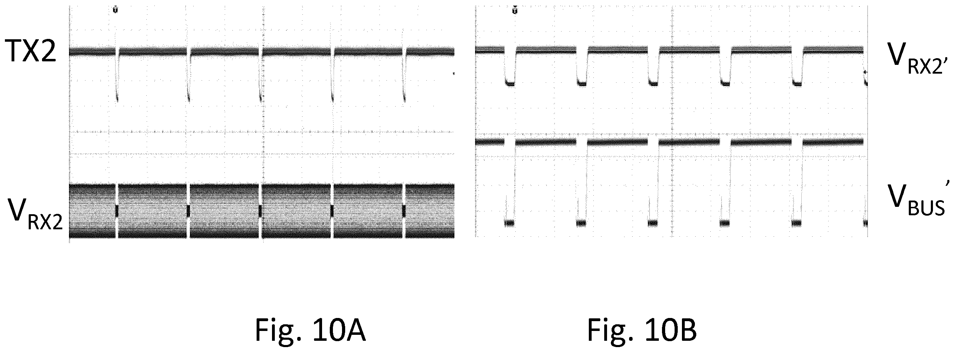

By way of example, Figures 10A and 10B depict signals from a simulation of the circuit of Figure 8 during the TX procedure. The top waveform of Figure 10A, labelled "TX2", depicts the signal from the control unit 24 with respect to elapsed time (increasing from left to right). The bottom waveform of Figure 10A, labelled "V_{RX2}", is the corresponding induced voltage signal on the RX data coil 30. The top waveform of Figure 10B, labelled "V_{RX2'}", is the corresponding filtered signal provided to the control circuit 70. The bottom waveform of Figure 10B, labelled "V_{BUS}'", is the corresponding signal on the DALI bus 60.

Accordingly, it will be appreciated that proposed embodiments may comprise a communication interface that is adapted to be connected to a communication bus. By way of example, embodiments may utilize the wireless coupling saturation and DALI communication characteristic to realize Bi-directional DALI communication and power supply. This may avoid the need for a translation circuit (e.g. microprocessor unit) between the control circuit and the interface circuit.

Communication may therefore be based on the DALI protocol, and, during communication Rx procedure, a regulating circuit may be employed adapted to draw energy higher than the energy on the secondary data winding induced by the first power winding of the interface circuit. Embodiments may therefore utilize DALI bus shortage and wireless system saturation to transfer a data signal to interface circuit wirelessly.

It could be understood that, in the present application, the high frequency signal on the primary winding would induce a high frequency signal with the same frequency on the secondary data winding (a transformer outputs a AC signal in the same frequency as the input AC signal); on top of this high frequency signal, a low frequency envelope is superimposed. The external circuit filters the high frequency signal and extract the low frequency envelop as the data to be received. What is important to notice is that the envelope has relatively low frequency with respect to the relatively high frequency of the AC signal.

The cited prior art US20150229224A1 discloses a transformer communication system. From figure 7 and paragraph 0067 of this prior art, it can be seen that the frequency of data to be transmitted/received is with the same frequency of the switching of the power MOSFET M1 of the switched mode power converter, in other words "one bit of information is transmitted...during the pause in every conversion cycle". US20150229224A1 uses the idle ring oscillation in each flyback phase of the flyback converter to deliver the data is 1 or 0, wherein the idle ring oscillation has different waveform for 1 or 0.

As shown in figure 7, the conversion cycle of the flyback converter could be construed as corresponding to the "relatively high frequency component induced by an HF AC power on the primary power winding" of the present application since it is the substantial power transfer from one side of the transformer to the other side of the transformer.

Given this mapping, US20150229224A1 superposes a same frequency data modulation to this high frequency flyback switching. US20150229224A1 does not superimpose a low frequency envelop with respect to this high frequency flyback switching.

The above system enables a solution to better support the after-installation configuration of lighting devices. The proposed solution contains two devices: a passive zero-power tag device for the storage of configuration data and a reader device for the retrieve of configuration data from the tag device. The tag device is in essence the external circuit in the above description, and the reader device is in essence the interface circuit in the above description and put into the lighting device and being powered and controlled by the lighting device. When the tag device is positioned close enough to the reader device, the tag device can be powered by the reader device and the configuration data is transferred from the tag device to the reader device, in a contact-less manner.

This way, low-cost tags in small and flexible form-factors can be distributed to users of lighting devices to realize easy and flexible after-installation configurations. After the installation of the lighting device, the user may purchase or obtain a tag containing application-specific dimming setting, and attach the tag at a proper location of a luminaire with TLED (tubular LED). The TLED containing a reader device is installed in the luminaire and powered up, and it can get the dimming setting data from the tag and set its dimming level accordingly.

Besides the dimming setting, the tag can also contain other information, like color, or a command to enabling an additional function in the luminaire or lamp, such as enabling a coded light function of the luminaire or lamp.

If the situation requires multiple different settings, the customer can order several tags and each passive tag is pre-set to one configuration.

It's also possible to have a standalone programmer which can be used to reprogram the tag. The programmer can be connected to a console device (such as computer) for power and data, and has an integrated transmitting coil that writes information into a passive tag when close touched, via the secondary data winding of the tag.

The programmer could also be used to configure TLEDs directly during manufacture. The programmer transmitting coil communicates with the primary data detection circuit inside TLED to enable its MCU, then programs the MCU through the communication between programmer (transmitting coil) and TLED (primary data detection circuit).

## Claims

1. An interface circuit (10) suitable to be used with an external ballast, the interface circuit comprising:
an input (12) to be coupled to the external ballast (14);
a primary power winding (16) electrically coupled to the input; and
a data transceiver circuit comprising:
a primary data winding (18);
a primary load across the primary data winding (18);
a primary load modulation circuit (22) electrically coupled to the primary data winding and adapted to modulate the primary load across the primary data winding in response to a first data signal to be transmitted via the primary data winding; and
a primary data detection circuit (22) electrically coupled to the primary data winding and adapted to detect a second data signal from a signal induced on the primary data winding,
wherein the primary power winding and the primary data winding are magnetically coupled together and adapted to be magnetically coupled to a secondary data winding (30) of an external circuit (11), **characterised in that**
the external ballast is an external electronic ballast (14) adapted for fluorescent or halogen lamps, the interface circuit (10) is suitable to be used with the external electronic ballast (14), and the input (12) is adapted to be coupled to the external electronic ballast (14).

2. The interface circuit of claim 1, further comprising a control unit (24) electrically coupled to the primary data detection circuit (22) and adapted to extract data from the second data signal, wherein the control unit is further electrically coupled to the primary load modulation (20) circuit and further adapted to generate the first data signal to be transmitted, and preferably wherein the control unit (24) comprises a microcontroller;
and the primary load modulation circuit (22) is adapted to modulate the primary load at a relatively low frequency with respect to the relatively high frequency of the AC power output by said external electronic ballast.

3. The interface circuit of any preceding claim, wherein said signal induced on the primary data winding comprises a relatively high frequency component induced by an HF AC power on the primary power winding (16) and a relatively low frequency envelope of the high frequency component, and the primary data detection circuit (22) comprises:
a filter circuit adapted to filter the signal induced on primary data winding (18) so as to generate a filtered signal, as the second data signal, which is the low frequency envelop of the high frequency component, by removing the frequency component corresponding to the AC signal induced by the primary power winding.

4. The interface circuit of claim 3, wherein said filter circuit is adapted to generate a pulse width modulation signal as the filtered second data signal, and wherein the interface circuit further comprises:
a driving unit (20) adapted to provide power supply to an external light source (26) from power from the input (12); and
a switching arrangement adapted to be controlled by the pulse width modulation signal to enable and disable the driving unit (20) in a pulse width modulation manner.

5. The interface circuit of claim 2, wherein the primary load modulation circuit (22) is adapted to modulate the primary load at a frequency at most one twentieth of the frequency of the AC power output by said external electronic ballast.

6. The interface circuit of any preceding claim, wherein the primary load modulation circuit (22) comprises a modulator adapted to generate a modulated signal in response to the first data signal to be transmitted and
wherein the primary load modulation circuit (22) comprises:
a switch across the primary data winding and adapted to load or not load the primary data winding (18) according to the modulated signal.

7. The interface circuit of any preceding claim, further comprising:
a sensing unit adapted to sense the external circuit and generate a sensing signal in response to a presence of the external circuit; and
a shorting circuit (50) electrically coupled to the primary data winding (18), wherein the shorting circuit is adapted to short circuit the primary data winding in response to an absence of said sensing signal;
wherein the coupling factor between the primary power winding (16) and the primary data winding (18) is higher than 0.95.

8. An external circuit (11) adapted to be magnetically coupled to the interface circuit (10) of any one of the preceding claims, wherein the external circuit comprises:
a secondary data winding (30) adapted to be magnetically coupled to the primary power winding (16) and the primary data winding (18) of the interface circuit (10);
a second load across the secondary data winding (30);
a secondary load modulation circuit (34) adapted to modulate the second load across the secondary data winding in response to a second data signal to be transmitted via the secondary data winding; and
a secondary data detection circuit (40) adapted to detect a first data signal from a signal induced on the secondary data winding;
wherein the secondary data detection circuit (40) further comprises a filter to filter the signal induced on the secondary data winding so as to generate a filtered signal, as the first data signal, which is a low frequency envelope of the high frequency component induced by an HF AC power on the primary power winding (16), by removing the high frequency component.

9. The external circuit of claim 8, further comprising a secondary control unit (42) electrically coupled to the secondary data detection circuit (40) and adapted to extract a first data from the first data signal, and wherein the secondary control unit (42) is electrically coupled to the secondary load modulation circuit (34) and further adapted to generate the second data signal to be transmitted.

10. The external circuit of claim 8, wherein the secondary load modulation circuit (34) is adapted to modulate the secondary load at a relative low frequency with respect to the relatively high frequency of the AC power on the primary power winding (16), output by said external electronic ballast,
preferably the secondary load modulation circuit (34) is adapted to modulate the secondary load at a frequency at most one twentieth of the frequency of an AC voltage induced on the secondary data winding by the AC power on the primary power winding.

11. The external circuit of claim 8, wherein the secondary load modulation circuit (34) is adapted to modulate a pulse width modulation signal as the second data signal, wherein said pulse width modulation signal is adapted to enable and disable the interface circuit in driving a light source in a pulse width modulation manner.

12. The external circuit of claim 8 or 9 further comprising:
a communication interface adapted to be connected to a communication bus (60),
wherein the secondary load modulation circuit comprises a switch (Q6) connected in parallel with the secondary data winding (30), wherein the switch is adapted to short or not short the secondary data winding in response to a communication signal received from the communication bus thereby transmitting the communication signal to the interface circuit.

13. The external circuit of claim 12, further comprising:
a converter circuit electrically coupled to the secondary data winding and adapted to convert power induced on the secondary data winding, wherein the converter circuit is electrically connected between the secondary data winding and the communication interface;
wherein the secondary data detection circuit (40) is adapted to detect the first data signal as an unfiltered communication signal, and further comprising:
a filter circuit (69) adapted to filter the first data signal induced on secondary data winding so as to generate a filtered first data signal as the communication signal,
and wherein the switch (Q6) of the secondary load modulation circuit is further coupled in parallel with the communication interface, and is adapted to short or not short said communication bus according to said filtered first data signal;

14. The external circuit of claim 13, wherein the converter circuit comprises a voltage amplification circuit (66) being adapted to amplify a voltage induced on the secondary data winding and to provide the amplified voltage to the communication interface,
and wherein the external circuit further comprises:
a regulating circuit (70) between the secondary data winding and the switch,
said regulating circuit being adapted to be, during communication from the interface circuit to the external circuit,
deactivated so as to isolate the converter circuit from the switch, when the switch of the secondary load modulation circuit is adapted to short said communication bus; and
activated so as to allow voltage from the converter circuit coupled to the communication bus when the switch of the secondary load modulation circuit is adapted to not short said communication bus;
and adapted to be, during communication from the external circuit to the interface circuit,
activated so as to allow voltage from the converter circuit coupled to the switch (Q6) when the switch is adapted to short or not short the secondary data winding in response to the communication Rx signal as the second data signal.

15. The external circuit of claim 14, wherein the communication is based on DALI protocol, and during communication from the external circuit to the interface circuit, said regulating circuit is adapted to draw energy higher than the energy on the secondary data winding induced by the first power winding of the interface circuit.

16. A lighting device comprising:
the interface circuit of claim 1; and
a light source driven by the driving unit of said interface circuit.

17. A lighting system comprising:
the lighting device of claim 16; and
the external circuit of any of claims 8 to 15,
and optionally wherein the external circuit is adapted to be removable from the lighting system so as to be replaced with a different external circuit.

## Patentansprüche

1. Schnittstellenschaltung (10), die zur Verwendung mit einem externen Vorschaltgerät geeignet ist, wobei die Schnittstellenschaltung umfasst:
einen Eingang (12), der mit dem externen Vorschaltgerät (14) zu koppeln ist;
eine primäre Leistungswicklung (16), die mit dem Eingang elektrisch gekoppelt ist; sowie
eine Datentransceiverschaltung mit:
einer primären Datenwicklung (18);
einer primären Last über die primäre Datenwicklung (18);
einer primären Lastmodulationsschaltung (22), die mit der primären Datenwicklung elektrisch gekoppelt und so eingerichtet ist, dass sie die primäre Last in Reaktion auf ein via die primäre Datenwicklung zu übertragendes erstes Datensignal über die primäre Datenwicklung moduliert; sowie
einer primären Datendetektionsschaltung (22), die mit der primären Datenwicklung elektrisch gekoppelt und so eingerichtet ist, dass sie ein zweites Datensignal aus einem auf der primären Datenwicklung induzierten Signal detektiert,
wobei die primäre Leistungswicklung und die primäre Datenwicklung magnetisch zusammengekoppelt und so angepasst sind, dass sie mit einer sekundären Datenwicklung (30) einer externen Schaltung (11) magnetisch gekoppelt sind, **dadurch gekennzeichnet, dass**
das externe Vorschaltgerät ein für Fluoreszenz- oder Halogenlampen ausgelegtes, externes, elektronisches Vorschaltgerät (14) ist, die Schnittstellenschaltung (10) zur Verwendung mit dem externen elektronischen Vorschaltgerät (14) geeignet ist und der Eingang (12) zur Kopplung mit dem externen, elektronischen Vorschaltgerät (14) angepasst ist.

2. Schnittstellenschaltung nach Anspruch 1, weiterhin umfassend eine Steuereinheit (24), die mit der primären Datendetektionsschaltung (22) elektrisch gekoppelt und so eingerichtet ist, dass sie Daten aus dem zweiten Datensignal extrahiert, wobei die Steuereinheit weiterhin mit der primären Lastmodulationsschaltung (20) elektrisch gekoppelt und weiterhin so eingerichtet ist, dass sie das zu übertragende erste Datensignal generiert, und wobei die Steuereinheit (24) vorzugsweise einen Mikrocontroller umfasst;
und die primäre Lastmodulationsschaltung (22) so eingerichtet ist, dass sie die primäre Last bei einer relativ niedrigen Frequenz gegenüber der relativ hohen Frequenz der AC-Leistungsabgabe durch dieses externe elektronische Vorschaltgerät moduliert.

3. Schnittstellenschaltung nach einem der vorangegangenen Ansprüche, wobei dieses auf der primären Datenwicklung induzierte Signal eine durch eine HF-Wechselstromleistung auf der primären Leistungswicklung (16) induzierte, relativ hohe Frequenzkomponente sowie eine relativ niedrige Frequenz-Hüllkurve der hohen Frequenzkomponente umfasst, und wobei die primäre Datendetektionsschaltung (22) umfasst:
eine Filterschaltung, die so eingerichtet ist, dass sie das auf der primären Datenwicklung (18) induzierte Signal filtert, um ein gefiltertes Signal als das zweite Datensignal, welches die niedrige Frequenz-Hüllkurve der hohen Frequenzkomponente darstellt, durch Entfernen der Frequenzkomponente entsprechend dem durch die primäre Leistungswicklung induzierten Wechselstromsignal zu generieren.

4. Schnittstellenschaltung nach Anspruch 3, wobei diese Filterschaltung so eingerichtet ist, dass sie ein Pulsbreitenmodulationssignal als das gefilterte zweite Datensignal generiert, und wobei die Schnittstellenschaltung weiterhin umfasst:
eine Ansteuerungsschaltung (20), die so eingerichtet ist, dass sie eine externe Lichtquelle (26) mit Strom aus Leistung aus dem Eingang (12) versorgt; sowie
eine Schaltanordnung, die so eingerichtet ist, dass sie durch das Pulsbreitenmodulationssignal zu steuern ist, um die Ansteuerungseinheit (20) in einer Pulsbreitenmodulationsweise zu aktivieren und deaktivieren.

5. Schnittstellenschaltung nach Anspruch 2, wobei die primäre Lastmodulationsschaltung (22) so eingerichtet ist, dass sie die primäre Last bei einer Frequenz bei höchstens einem Zwanzigstel der Frequenz der AC-Leistungsabgabe durch dieses externe elektronische Vorschaltgerät moduliert.

6. Schnittstellenschaltung nach einem der vorangegangenen Ansprüche, wobei die primäre Lastmodulationsschaltung (22) einen Modulator umfasst, der so eingerichtet ist, dass er in Reaktion auf das zu übertragende erste Datensignal ein moduliertes Signal generiert, und
wobei die primäre Lastmodulationsschaltung (22) umfasst:
einen Schalter über die primäre Datenwicklung, der so eingerichtet ist, dass er die primäre Datenwicklung (18) entsprechend dem modulierten Signal lädt oder nicht lädt.

7. Schnittstellenschaltung nach einem der vorangegangenen Ansprüche, weiterhin umfassend:
eine Abtasteinheit, die so eingerichtet ist, dass sie die externe Schaltung abtastet und in Reaktion auf ein Vorhandensein der externen Schaltung ein Abtastsignal generiert; sowie
eine Kurzschlussschaltung (50), die mit der primären Datenwicklung (18) elektrisch gekoppelt ist, wobei die Kurzschlussschaltung so eingerichtet ist, dass sie die primäre Datenwicklung in Reaktion auf ein Nichtvorliegen dieses Abtastsignals kurzschließt;
wobei der Kopplungsfaktor zwischen der primären Leistungswicklung (16) und der primären Datenwicklung (18) höher als 0,95 ist.

8. Externe Schaltung (11), die so eingerichtet ist, dass sie mit der Schnittstellenschaltung (10) nach einem der vorangegangenen Ansprüche magnetisch gekoppelt ist, wobei die externe Schaltung umfasst:
eine sekundäre Datenwicklung (30), die so eingerichtet ist, dass sie mit der primären Leistungswicklung (16) und der primären Datenwicklung (18) der Schnittstellenschaltung (10) magnetisch gekoppelt ist;
eine zweite Last über die sekundäre Datenwicklung (30);
eine sekundäre Lastmodulationsschaltung (34), die so eingerichtet ist, dass sie die zweite Last in Reaktion auf ein via die sekundäre Datenwicklung zu übertragendes zweites Datensignal über die sekundäre Datenwicklung moduliert; sowie
eine sekundäre Datendetektionsschaltung (40), die so eingerichtet ist, dass sie ein erstes Datensignal aus einem auf der sekundären Datenwicklung induzierten Signal detektiert;
wobei die sekundäre Datendetektionsschaltung (40) weiterhin einen Filter umfasst, um das auf der sekundären Datenwicklung induzierte Signal zu filtern, um ein gefiltertes Signal als das erste Datensignal, welches eine niedrige Frequenz-Hüllkurve der durch eine HF-Wechselstromleistung auf der primären Leistungswicklung (16) induzierten, hohen Frequenzkomponente darstellt, durch Entfernen der hohen Frequenzkomponente zu generieren.

9. Externe Schaltung nach Anspruch 8, weiterhin umfassend eine sekundäre Steuereinheit (42), die mit der sekundären Datendetektionsschaltung (40) elektrisch gekoppelt und so eingerichtet ist, dass sie erste Daten aus dem ersten Datensignal extrahiert, und wobei die sekundäre Steuereinheit (42) mit der sekundären Lastmodulationsschaltung (34) elektrisch gekoppelt und weiterhin so eingerichtet ist, dass sie das zu übertragende zweite Datensignal generiert.

10. Externe Schaltung nach Anspruch 8, wobei die sekundäre Lastmodulationsschaltung (34) so eingerichtet ist, dass sie die sekundäre Last bei einer relativ niedrigen Frequenz gegenüber der relativ hohen Frequenz der Wechselstromleistung auf der primären Leistungswicklung (16), die von diesem externen elektronischen Vorschaltgerät abgegeben wird, moduliert,
wobei die sekundäre Lastmodulationsschaltung (34) vorzugsweise so eingerichtet ist, dass sie die sekundäre Last bei einer Frequenz bei höchstens einem Zwanzigstel der Frequenz einer Wechselspannung moduliert, die auf der sekundären Datenwicklung durch die Wechselstromleistung auf der primären Leistungswicklung induziert wird.

11. Externe Schaltung nach Anspruch 8, wobei die sekundäre Lastmodulationsschaltung (34) so eingerichtet ist, dass sie ein Pulsbreitenmodulationssignal als das zweite Datensignal moduliert, wobei dieses Pulsbreitenmodulationssignal so adaptiert ist, dass es die Schnittstellenschaltung bei Ansteuerung einer Lichtquelle in einer Pulsbreitenmodulationsweise aktiviert und deaktiviert.

12. Externe Schaltung nach Anspruch 8 oder 9, weiterhin umfassend:
eine Kommunikationsschnittstelle, die zum Anschluss an einen Kommunikationsbus (60) eingerichtet ist,
wobei die sekundäre Lastmodulationsschaltung einen Schalter (Q6) umfasst, der parallel zu der sekundären Datenwicklung (30) geschaltet ist, wobei der Schalter so eingerichtet ist, dass er die sekundäre Datenwicklung in Reaktion auf ein von dem Kommunikationsbus empfangenes Kommunikationssignal kurzschließt oder nicht kurzschließt, wodurch das Kommunikationssignal zu der Schnittstellenschaltung übertragen wird.

13. Externe Schaltung nach Anspruch 12, weiterhin umfassend:
eine Stromrichterschaltung, die mit der sekundären Datenwicklung elektrisch gekoppelt und so eingerichtet ist, dass sie auf der sekundären Datenwicklung induzierte Leistung umwandelt, wobei die Stromrichterschaltung zwischen der sekundären Datenwicklung und der Kommunikationsschnittstelle elektrisch geschaltet ist;
wobei die sekundäre Datendetektionsschaltung (40) so eingerichtet ist, dass sie das erste Datensignal als ein ungefiltertes Kommunikationssignal detektiert, und weiterhin umfasst:
einen Filterkreis (69), der so eingerichtet ist, dass er das auf der sekundären Datenwicklung induzierte erste Datensignal filtert, um ein gefiltertes erstes Datensignal als das Kommunikationssignal zu generieren,
und wobei der Schalter (Q6) der sekundären Lastmodulationsschaltung weiterhin parallel zu der Kommunikationsschnittstelle geschaltet und so eingerichtet ist, dass er diesen Kommunikationsbus entsprechend diesem gefilterten ersten Datensignal kurzschließt oder nicht kurzschließt.

14. Externe Schaltung nach Anspruch 13, wobei die Stromrichterschaltung eine Spannungsverstärkungsschaltung (66) umfasst, die so eingerichtet ist, dass sie eine auf der sekundären Datenwicklung induzierte Spannung verstärkt und die verstärkte Spannung der Kommunikationsschnittstelle zuführt,
und wobei die externe Schaltung weiterhin umfasst:
eine Regelschaltung (70) zwischen der sekundären Datenwicklung und dem Schalter,
wobei diese Regelschaltung so eingerichtet ist, dass sie bei Kommunikation von der Schnittstellenschaltung zu der externen Schaltung
deaktiviert wird, um die Stromrichterschaltung von dem Schalter zu isolieren, wenn der Schalter der sekundären Lastmodulationsschaltung so eingerichtet ist, dass er diesen Kommunikationsbus kurzschließt; und
aktiviert wird, um eine Spannung von der mit dem Kommunikationsbus gekoppelten Stromrichterschaltung zu ermöglichen, wenn der Schalter der sekundären Lastmodulationsschaltung so eingerichtet ist, dass er diesen Kommunikationsbus nicht kurzschließt;
und so eingerichtet ist, dass sie bei Kommunikation von der externen Schaltung zu der Schnittstellenschaltung
aktiviert wird, um eine Spannung von der mit dem Schalter (Q6) gekoppelten Stromrichterschaltung zu ermöglichen, wenn der Schalter so eingerichtet ist, dass er die sekundäre Datenwicklung in Reaktion auf das Kommunikationssignal Rx als das zweite Datensignal kurzschließt oder nicht kurzschließt.

15. Externe Schaltung nach Anspruch 14, wobei die Kommunikation auf dem DALI-Protokoll basiert und
bei Kommunikation von der externen Schaltung zu der Schnittstellenschaltung
diese Regelschaltung so eingerichtet ist, dass sie eine höhere Energie als die Energie auf der sekundären Datenwicklung, die durch die erste Leistungswicklung der Schnittstellenschaltung induziert wird, entnimmt.

16. Beleuchtungsvorrichtung, umfassend:
die Schnittstellenschaltung nach Anspruch 1; sowie
eine Lichtquelle, die durch die Ansteuerungseinheit dieser Schnittstellenschaltung angesteuert wird.

17. Beleuchtungssystem, umfassend:
die Beleuchtungsvorrichtung nach Anspruch 16; sowie die externe Schaltung nach einem der Ansprüche 8 bis 15,
und wobei optional die externe Schaltung so eingerichtet ist, dass sie von dem Beleuchtungssystem entfernbar ist, um durch eine andere externe Schaltung ersetzt zu werden.

## Revendications

1. Circuit d'interface (10) destiné à être utilisé avec un ballast externe, le circuit d'interface comprenant :
une entrée (12) devant être couplée au ballast externe (14) ;
un enroulement de puissance primaire (16) couplé électriquement à l'entrée ; et
un circuit émetteur-récepteur de données comprenant :
un enroulement de données primaire (18) ;
une charge primaire à travers l'enroulement de données primaire (18) ;
un circuit de modulation de charge primaire (22) couplé électriquement à l'enroulement de données primaire et adapté pour moduler la charge primaire à travers l'enroulement de données primaire en réponse à un premier signal de données devant être transmis par l'intermédiaire de l'enroulement de données primaire ; et
un circuit de détection de données primaire (22) couplé électriquement à l'enroulement de données primaire et adapté pour détecter un second signal de données à partir d'un signal induit sur l'enroulement de données primaire,
dans lequel l'enroulement de puissance primaire et l'enroulement de données primaire sont couplés magnétiquement l'un à l'autre et adaptés pour être couplés magnétiquement à un enroulement de données secondaire (30) d'un circuit externe (11), **caractérisé en ce que**
le ballast externe est un ballast électronique externe (14) adapté pour des lampes fluorescentes ou halogène, le circuit d'interface (10) est destiné à être utilisé avec le ballast électronique externe (14), et l'entrée (12) est adaptée pour être couplée au ballast électronique externe (14).

2. Circuit d'interface selon la revendication 1, comprenant en outre une unité de commande (24) couplée électriquement au circuit de détection de données primaire (22) et adaptée pour extraire des données du second signal de données, dans lequel l'unité de commande est en outre couplée électriquement au circuit de modulation de charge primaire (20) et adaptée en outre pour générer le premier signal de données devant être transmis, et de préférence dans lequel l'unité de commande (24) comprend un microcontrôleur ;
et le circuit de modulation de charge primaire (22) est adapté pour moduler la charge primaire à une fréquence relativement basse par rapport à la fréquence relativement élevée de la sortie de puissance CA par ledit ballast électronique externe.

3. Circuit d'interface selon l'une quelconque des revendications précédentes, dans lequel ledit signal induit sur l'enroulement de données primaire comprend une composante de fréquence relativement élevée induite par une puissance CA HF sur l'enroulement de puissance primaire (16) et une enveloppe de fréquence relativement basse de la composante de fréquence élevée, et le circuit de détection de données primaire (22) comprend :
un circuit de filtrage adapté pour filtrer le signal induit sur l'enroulement de données primaire (18) de sorte à générer un signal filtré, en tant que second signal de données, qui est l'enveloppe de fréquence basse de la composante de fréquence élevée, en supprimant la composante de fréquence correspondant au signal CA induit par l'enroulement de puissance primaire.

4. Circuit d'interface selon la revendication 3, dans lequel ledit circuit de filtrage est adapté pour générer un signal de modulation de largeur d'impulsion en tant que second signal de données filtré, et dans lequel le circuit d'interface comprend en outre :
une unité d'excitation (20) adaptée pour fournir une alimentation en puissance à une source de lumière externe (26) à partir d'une puissance provenant de l'entrée (12) ; et
un agencement de commutation adapté pour être commandé par le signal de modulation de largeur d'impulsion pour activer et désactiver l'unité d'excitation (20) à la manière d'une modulation de largeur d'impulsion.

5. Circuit d'interface selon la revendication 2, dans lequel le circuit de modulation de charge primaire (22) est adapté pour moduler la charge primaire à une fréquence d'un vingtième au plus de la fréquence de la puissance CA produite en sortie par ledit ballast électronique externe.

6. Circuit d'interface selon l'une quelconque des revendications précédentes, dans lequel le circuit de modulation de charge primaire (22) comprend un modulateur adapté pour générer un signal modulé en réponse au premier signal de données devant être transmis et
dans lequel le circuit de modulation de charge primaire (22) comprend :
un commutateur à travers l'enroulement de données primaire et adapté pour charger ou ne pas charger l'enroulement de données primaire (18) en fonction du signal modulé.

7. Circuit d'interface selon l'une quelconque des revendications précédentes, comprenant en outre :
une unité de détection adaptée pour détecter le circuit externe et générer un signal de détection en réponse à une présence du circuit externe ; et
un circuit de court-circuit (50) couplé électriquement à l'enroulement de données primaire (18), dans lequel le circuit de court-circuit est adapté pour court-circuiter l'enroulement de données primaire en réponse à une absence dudit signal de détection ,
dans lequel le facteur de couplage entre l'enroulement de puissance primaire (16) et l'enroulement de données primaire (18) est supérieur à 0,95.

8. Circuit externe (11) adapté pour être couplé magnétiquement au circuit d'interface (10) selon l'une quelconque des revendications précédentes, dans lequel le circuit externe comprend :
un enroulement de données secondaire (30) adapté pour être couplé magnétiquement à l'enroulement de puissance primaire (16) et à l'enroulement de données primaire (18) du circuit d'interface (10) ;
une seconde charge à travers l'enroulement de données secondaire (30) ;
un circuit de modulation de charge secondaire (34) adapté pour moduler la seconde charge à travers l'enroulement de données secondaire en réponse à un second signal de données devant être transmis via l'enroulement de données secondaire ; et
un circuit de détection de données secondaire (40) adapté pour détecter un premier signal de données à partir d'un signal induit sur l'enroulement de données secondaire ;
dans lequel le circuit de détection de données secondaire (40) comprend en outre un filtre pour filtrer le signal induit sur l'enroulement de données secondaire de sorte à générer un signal filtré, en tant que premier signal de données, qui est une enveloppe de fréquence basse de la composante de fréquence élevée induite par une puissance CA HF sur l'enroulement de puissance primaire (16), en supprimant la composante de fréquence élevée.

9. Circuit externe selon la revendication 8, comprenant en outre une unité de commande secondaire (42) couplée électriquement au circuit de détection de données secondaire (40) et adaptée pour extraire une première donnée du premier signal de données, et dans lequel l'unité de commande secondaire (42) est couplée électriquement au circuit de modulation de charge secondaire (34) et adaptée en outre pour générer le second signal de données devant être transmis.

10. Circuit externe selon la revendication 8, dans lequel le circuit de modulation de charge secondaire (34) est adapté pour moduler la charge secondaire à une fréquence basse relative par rapport à la fréquence élevée relative de la puissance CA sur l'enroulement de puissance primaire (16) produite en sortie par ledit ballast électronique externe,
de préférence le circuit de modulation de charge secondaire (34) est adapté pour moduler la charge secondaire à une fréquence d'un vingtième au plus la fréquence d'une tension CA induite sur l'enroulement de données secondaire par la puissance CA sur l'enroulement de puissance primaire.

11. Circuit externe selon la revendication 8, dans lequel le circuit de modulation de charge secondaire (34) est adapté pour moduler un signal de modulation de largeur d'impulsion en tant que second signal de données,
dans lequel ledit signal de modulation de largeur d'impulsion est adapté pour activer et désactiver le circuit d'interface en excitant une source de lumière à la manière d'une modulation de largeur d'impulsion.

12. Circuit externe selon la revendication 8 ou 9, comprenant en outre :
une interface de communication adaptée pour être connectée à un bus de communication (60),
dans lequel le circuit de modulation de charge secondaire comprend un commutateur (Q6) connecté en parallèle avec l'enroulement de données secondaire (30), dans lequel le commutateur est adapté pour court-circuiter ou ne pas court-circuiter l'enroulement de données secondaire en réponse à un signal de communication reçu du bus de communication, transmettant ainsi le signal de communication au circuit d'interface.

13. Circuit externe selon la revendication 12, comprenant en outre :
un circuit convertisseur couplé électriquement à l'enroulement de données secondaire et adapté pour convertir une puissance induite sur l'enroulement de données secondaire, dans lequel le circuit convertisseur est connecté électriquement entre l'enroulement de données secondaire et l'interface de communication ;
dans lequel le circuit de détection de données secondaire (40) est adapté pour détecter le premier signal de données en tant que signal de communication non filtré, et comprenant en outre :
un circuit de filtrage (69) adapté pour filtrer le premier signal de données induit sur l'enroulement de données secondaire de sorte à générer un premier signal de données filtré en tant que signal de communication,
et dans lequel le commutateur (Q6) du circuit de modulation de charge secondaire est en outre couplé en parallèle à l'interface de communication, et est adapté pour court-circuiter ou ne pas court-circuiter ledit bus de communication en fonction dudit premier signal de données filtré.

14. Circuit externe selon la revendication 13, dans lequel le circuit convertisseur comprend un circuit d'amplification de tension (66) adapté pour amplifier une tension induite sur l'enroulement de données secondaire et pour fournir la tension amplifiée à l'interface de communication,
et dans lequel le circuit externe comprend en outre :
un circuit de régulation (70) entre l'enroulement de données secondaire et le commutateur,
ledit circuit de régulation étant adapté pour être, pendant une communication du circuit d'interface au circuit externe,
désactivé de sorte à isoler le circuit convertisseur du commutateur, lorsque le commutateur du circuit de modulation de charge secondaire est adapté pour court-circuiter ledit bus de communication ; et
activé de sorte à permettre une tension du circuit convertisseur couplé au bus de communication lorsque le commutateur du circuit de modulation de charge secondaire est adapté pour ne pas court-circuiter ledit bus de communication :
et adapté pour être, pendant une communication du circuit externe au circuit d'interface,
activé de sorte à permettre à une tension du circuit convertisseur couplé au commutateur (Q6) lorsque le commutateur est adapté pour court-circuiter ou ne pas court-circuiter l'enroulement de données secondaire en réponse au signal de communication Rx en tant que second signal de données.

15. Circuit externe selon la revendication 14, dans lequel la communication est basée sur un protocole DALI, et
pendant une communication du circuit externe au circuit d'interface, ledit circuit de régulation est adapté pour tirer de l'énergie supérieure à l'énergie sur l'enroulement de données secondaire induit par le premier enroulement de puissance du circuit d'interface.

16. Dispositif d'éclairage comprenant :
le circuit d'interface selon la revendication 1 ; et
une source de lumière excitée par l'unité d'excitation dudit circuit d'interface.

17. Système d'éclairage comprenant :
le dispositif d'éclairage selon la revendication 16 ; et
le circuit externe selon l'une quelconque des revendications 8 à 15,
et éventuellement dans lequel le circuit externe est adapté pour pouvoir être retiré du système d'éclairage de sorte à être remplacé par un circuit externe différent.
